# EUROPEAN PATENT SPECIFICATION

(11) **EP 2 969 331 B1**
(45) Date of publication and mention of the grant of the patent: **03.01.2018**
(21) Application number: 14774690.3
(22) Date of filing: 13.03.2014
(51) Int. Cl.: B23D 45/02, B23D 47/02, B27B 5/18

(54) **POWER TOOL IN FORM OF AN INTEGRAL CUTTING SYSTEM**
KRAFTWERKZEUG IN FORM EINES INTEGRIERTEN SCHNEIDESYSTEMS
OUTIL ÉLECTRIQUE EN FORME DE SYSTÈME DE COUPE INTÉGRÉ

(30) Priority: 14.03.2013 US 201361781201 P
(43) Date of publication of application: 20.01.2016
(73) Proprietor: Robert Bosch GmbH, 70442 Stuttgart (DE)
(72) Inventor: KOEGEL, Jan, Oak Park, IL 60302 (US)
(86) International application number: PCT/US2014/025834
(87) International publication number: WO 2014/160108

(56) References cited:
- DE-A1- 4 438 284
- US-A- 3 302 669
- US-A- 3 302 669
- US-A- 4 494 431
- US-A- 4 576 076
- US-A- 4 576 076
- US-A- 5 568 756
- US-A- 5 868 185
- US-A- 5 950 514
- US-A1- 2007 039 441

## Description

### TECHNICAL FIELD

The present invention relates to powered cutting tools, and, in particular, to a power tool according to the preamble of claim 1.

Such a power tool is known from DE 44 38 284 A1.

### BACKGROUND

There are many different types of cutting tools and saws that are configured to perform different types of cutting operations, e.g., miter cuts, bevel cuts, rip cuts, plunge cuts, and the like, which are useful in different applications. To perform different types of cuts for a project, several different tools may be required, such as a chop saw, sliding miter saw, table saw, plunge router, vertical saw, band saw, planer, compound, circular saw, and the like. If the project is at a jobsite, then each of these tools may have to be loaded onto a vehicle and then unloaded at the destination. There has been an effort to combine multiple tool functionality into a single tool. For example, combination saws and flip-over saws combine a miter saw and table saw in one tool. This enables a user to perform multiple cuts with a single tool. However, there is a continuing effort to provide cutting tools with even more cutting capabilities. The invention provides a power tool according to claim 1.

### DRAWINGS

FIG. 1 is a front elevational perspective view of an embodiment of a power tool not falling under the scope of the claims.
FIG. 2 is a top view of the power tool of FIG. 1
FIG. 3 is a perspective view of an embodiment of a power tool according to the invention.
FIG. 4 is another perspective view of the power tool of FIG. 3.
FIG. 5 is a perspective view of the power tool of FIG. 3 showing the kinematics and movement capabilities of the components of the power tool.
FIGS. 6A-6C show front, side, and top elevational views, respectively, of the power tool of FIG. 1 with the pivot arm pivoted to bring the saw blade closer to the table top.
FIG. 6D is a top view of the power tool of FIGS. 6A-6C equipped with a fence for performing chop cuts.
FIG. 6E is a perspective view of the fence for performing chop cuts depicted in FIG. 6D.
FIGS. 7A-7C show front, side, and top elevational views, respectively, of the power tool of FIG. 1 with the linear extension rail of the height adjustment mechanism extended to position the saw in a low position.
FIGS. 8A-8C show front, side, and top elevational views, respectively, of an embodiment of a power tool according to the invention including a horizontal guide.
FIG. 8D is a top view of the power tool of FIGS. 8A-8C equipped with a rip fence for performing rip cuts.
FIGS. 9A-9C show front, side, and top elevational views, respectively, of an embodiment of a power tool not falling under the scope of the claims having a half-arch saw support and a double miter fence.
FIG. 10 depicts a side view of a power tool not falling under the scope of the claims including a plunge guard showing the saw being used to perform a plunge cut into a workpiece.
FIG. 11 depicts a side view of the power tool of FIG. 10 showing the saw being used to perform a groove cut.
FIG. 12A depicts the power tool of FIG. 1 with the circular saw replaced with the router fixture, showing the router fixture in centered and inclined positions.
FIG. 12B depicts a side view of the power tool of FIG. 12A with the router fixture supported on a horizontal guide rail.
FIG. 13A depicts an embodiment of a power tool according to the invention having bevel angle indicator markings and a viewing window in the arc support unit and showing various workpiece clamping and guide accessories mounted onto the Saw.
FIG. 13B depicts a side view of the embodiment of FIG. 13A.

### DETAILED DESCRIPTION

For the purposes of promoting an understanding of the invention, reference will now be made to the embodiments illustrated in the drawings and described in the following written specification.

The present disclosure is directed to a portable power cutting tool, referred to herein as an integral cutting system, including a cutting table having a cutting tool support with an integral cutting tool, such as a circular saw, supported thereon. The cutting tool is supported in a manner that enables the cutting tool to be operated as a miter saw and chop saw (movable blade) with beveling and sliding capability as well as a table saw (stationary blade) with beveling. The integral cutting tool is also capable of being used to perform plunge cuts and groove cutting. In addition, the integral cutting tool is capable of being swapped out and replaced with another cutting tool, such as a router, which enables milling, grooving, and drilling operations. These and other features of the integral cutting system are described below.

The power tool includes a base, a table top supported on the base having a generally planar support surface, and a tool support assembly. The tool support assembly includes an arch-shaped support member attached to a first side portion of the base which extends arcuately from the first side portion toward a second side portion of the base. The tool support assembly also includes an arch slide mount slidably supported on the arch-shaped support member and positionable at a plurality of different angular positions along the arch-shaped support member. The power tool includes a cutting assembly supported above the table top by the arch slide mount. The cutting assembly includes a saw blade that extends toward the table top and defines a cutting plane. The cutting assembly is supported by the arch slide mount such that movement of the arch slide mount along the arch-shaped support member alters an orientation of the cutting assembly with respect to the table top.

The tool support assembly may include a height adjustment assembly that couples the cutting assembly to the arch slide mount and that enables the cutting assembly to be selectively positioned at a plurality of different distances from table top. The tool support assembly includes a horizontal guide assembly coupled to the arch slide mount which defines a linear guide path extending over at least a portion of the table top and arranged substantially parallel to the support surface with the cutting assembly slidably supported by the horizontal guide member for sliding movement along the linear guide path and with the saw blade arranged with the cutting plane parallel to the linear guide path. The tool support assembly may include both of the height adjustment assembly and horizontal guide assembly.

The height adjustment assembly may be configured to allow the cutting assembly to be moved and guided along an axis toward an away from the table top to perform plunge cutting operations with the cutting assembly. The cutting assembly may include a plunge guard that is removably attached to the housing of the cutting assembly and that extends downwardly from the housing to form a perimeter wall surrounding the saw blade. The plunge guard may be configured to be moved into contact with an upper surface of a workpiece positioned on the table top as the cutting assembly is being moved to perform a plunge cut on the workpiece. In this embodiment, the plunge guard may be movably attached to the housing such that the cutting assembly is allowed to continue to move toward the workpiece once the plunge guard is positioned in contact with the workpiece. The plunge guard may also include rollers which are positioned against the upper surface of the workpiece.

The power tool may further comprise other accessories, such as a fence assembly. The fence assembly may be configured to provide support and guidance in different types of cutting operations, such as miter cuts and rip cuts. The power tool may also include at least one hold down member for holding down a workpiece during cutting operations. A hold down member may be releasably attached to the horizontal guide member in front of or behind the cutting assembly with the hold down member extending down to press against an upper surface of a workpiece supported on the table top. The hold down member may include for positioning in contact with an upper surface of the workpiece.

In another embodiment, a power tool support system is provided that includes a base, a table top supported on the base and having a generally planar support surface, and a tool support assembly. The tool support assembly includes an arch-shaped support member attached to a first side portion of the base and which extends arcuately from the first side portion toward a second side portion of the base. An arch slide mount is slidably supported on the arch-shaped support member and positionable at a plurality of different angular positions along the arch-shaped support member. The tool support assembly includes a tool mount coupled to the arch slide mount and configured to releasably retain a cutting tool at a predetermined orientation with respect to the table top.

The power tool support system may include both of the height adjustment assembly and horizontal guide assembly. The support assembly may also be configured to enable plunge cutting operations to be performed with a cutting tool. The tool mount is configured to releasably retain at least one type of cutting tool, such as a circular saw, a router, or both.

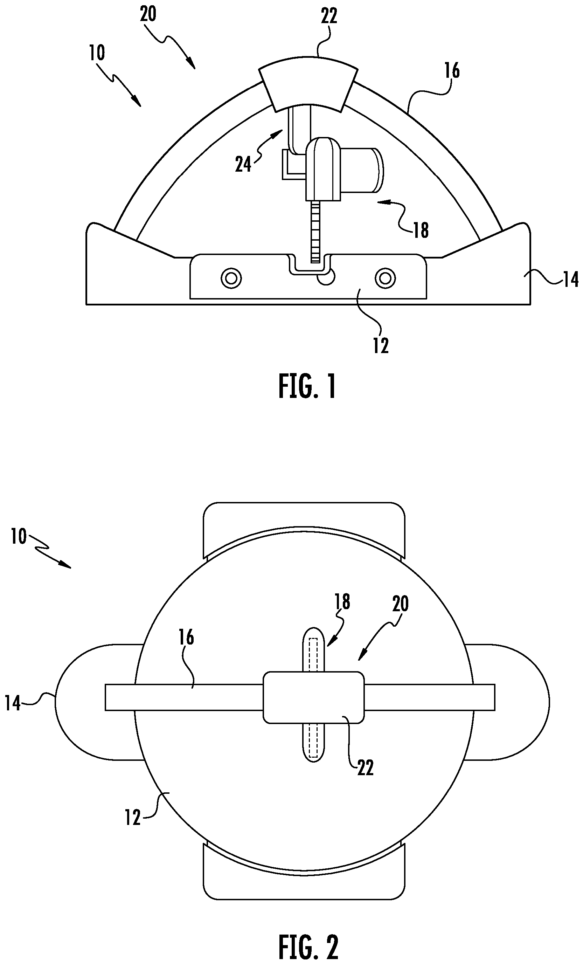

Referring now to the drawings, an embodiment of an integral cutting system 10 in accordance with the present disclosure is depicted in FIG. 1. The integral cutting system 10 includes a base 12 having a table top 14. The table top 14 has a generally planar upper support surface upon which workpieces are supported during cutting operations. In the embodiment of FIGS. 1 and 2, the table top 14 is rotatably supported on the base 12 and therefore may also be referred to herein as a turntable. In some embodiments (not depicted), the integral cutting system 10 may include a table top that slides back and forth longitudinally rather than being rotatable with respect to the base 12.

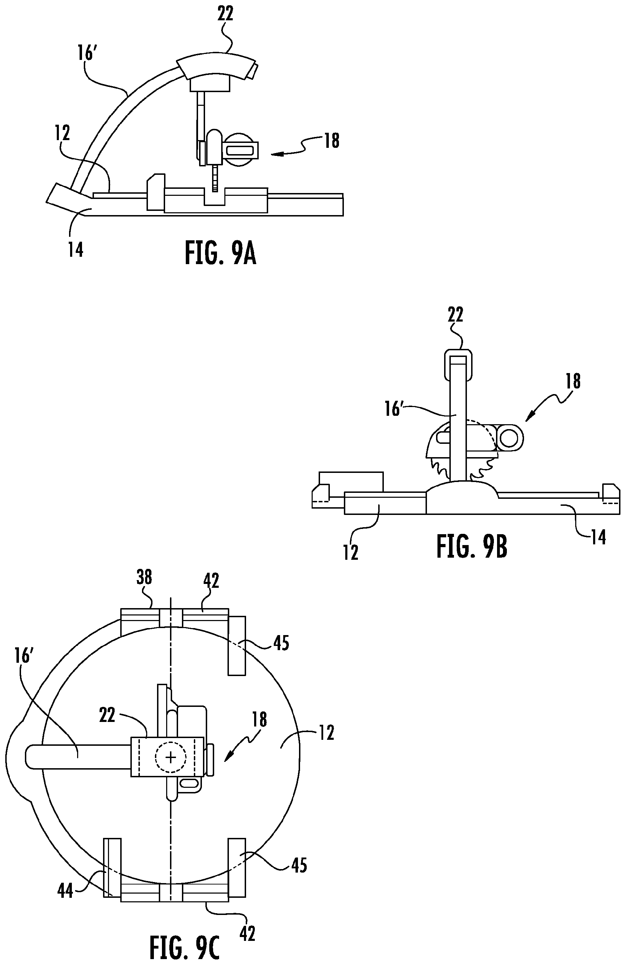

The cutting system 10 includes a cutting assembly support for supporting a cutting assembly above the table top and enabling various types of cuts to be performed. The cutting assembly support includes an arch-shaped support and guide member 16, or arch, that extends arcuately upwardly from the base on at least one side of the table top 14 to a central position above the center of the base 12. In the embodiment of FIG. 1, the arch 16 comprises a full arch that extends all the way across to the portion of the base located on the opposite side of the table top 14 such that the arch 16 is supported on each side of the table top 14. In alternative embodiments not falling under the scope of the claims, the arch 16 may comprise a half arch 16' (FIGS. 9A-9C) that is supported on only one side of the table top 14. An arch may also be configured to telescope between a half arch configuration and a full arch configuration.

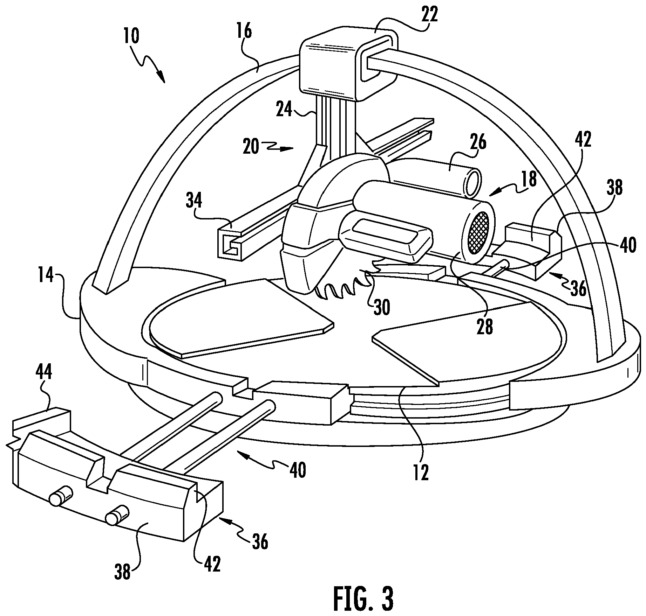

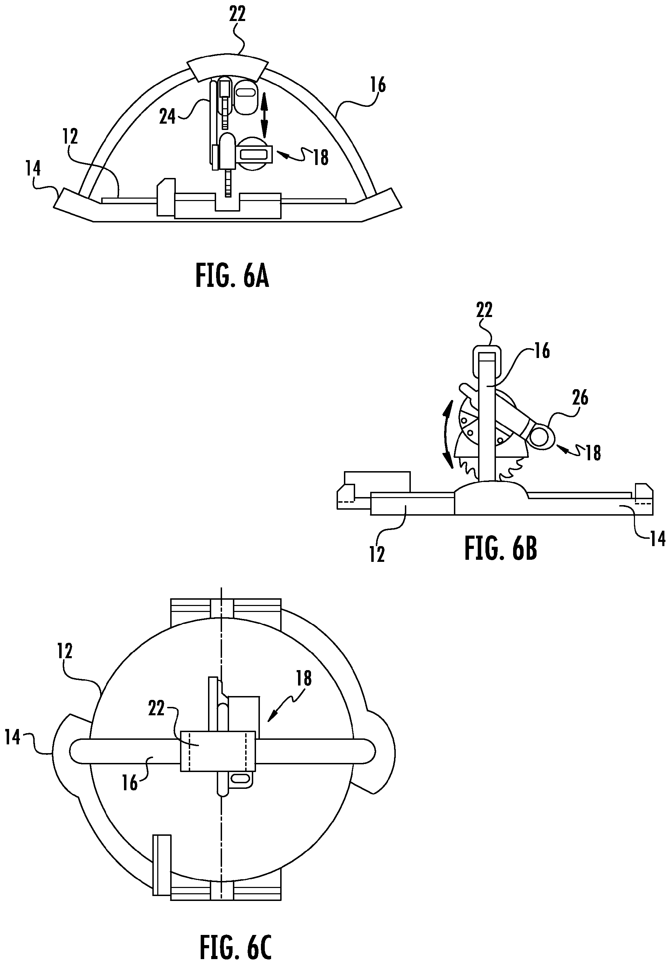

A cutting assembly 18 is supported on the arch 16 by a support assembly 20. With reference to FIG. 3, the cutting assembly 18 includes a pivot arm 26, a motor unit 28, and a saw blade 30. The pivot arm 26 is pivotably attached at one end to the tool mount for pivotable movement toward and away from the base 12. The motor unit 28 is supported at the other end of the pivot arm 26. The motor unit 28 is configured to drive the saw blade 30 to rotate so that when the motor unit 28 is pivoted toward the base 12 by the pivot arm 26, the saw blade can perform cuts and miter cuts on a workpiece. FIGS. 6A-6C depict the pivot arm 26 being pivoted to move the motor unit 28 and saw blade 30 toward the base 12. As can be seen in FIGS. 6A and 6C, the saw blade 30 is supported with the plane of the blade centered on the base 12.

In the embodiment of FIGS. 1 and 2, the support assembly 20 includes an arch slide mount 22. The arch slide mount 22 is supported on the arch 16 and is configured to slide along the arch 16 and be locked in position at a plurality of different angular positions in relation to the arch. The angular positions include a home position (depicted in FIGS. 1 and 2) at which the cutting assembly 18 is centered over the table top 14 with the saw blade 30 arranged perpendicular to the support surface.

The cutting assembly 18 is supported by the arch slide mount 22 in a manner that enables the movement of the arch slide mount 22 along the arch to predictably alter the orientation of the cutting assembly 18, and in particular the saw blade 30, with respect to the table top. The arch 16 defines an arcuate guide path that is centered on the center point of the table top 14. The cutting assembly 18 is supported in a manner that enables the plane of saw blade 18 to intersect the center point of the table top 14 at each possible position of the arch slide mount 22 along the arch 16. Each angular position of the arch slide mount 22 along the arch 16 alters the bevel angle of the saw blade with respect to the table top. The arch slide mount 22 may be configured to slide from the home position in a single direction along one of the half arch segments (e.g., single bevel) or both directions along both half arch segments (e.g., double bevel).

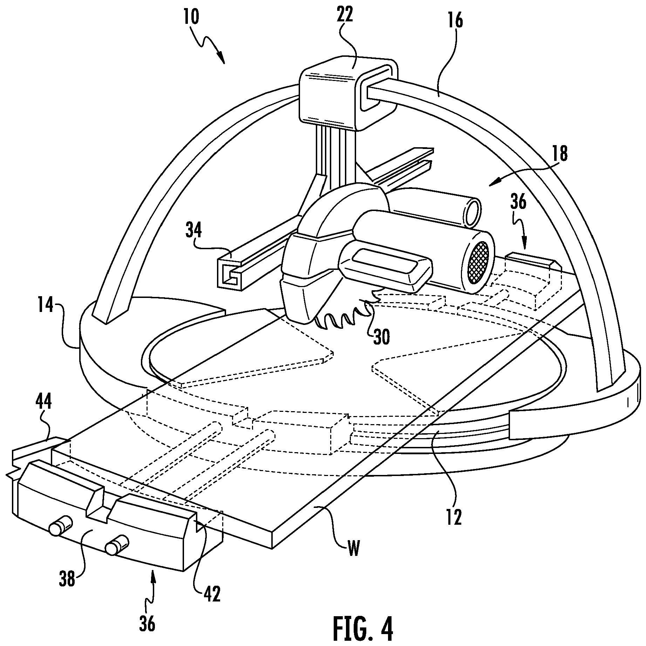

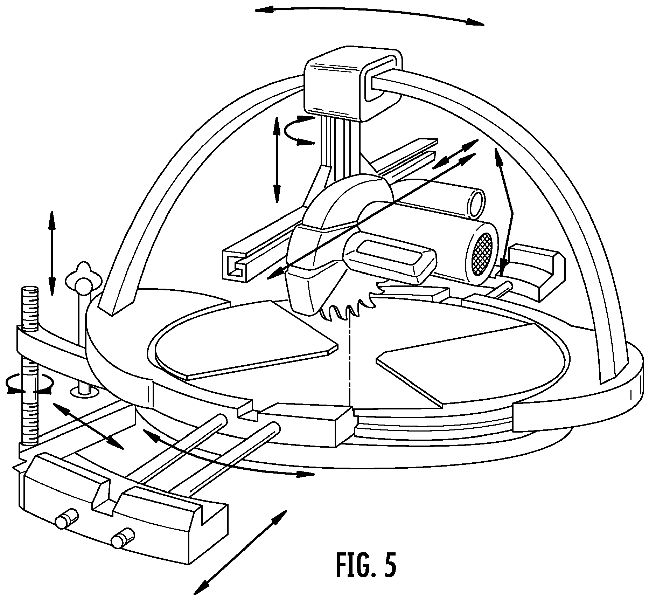

Referring now to FIGS. 3 and 4, an embodiment of a power tool is depicted that includes a vertical, or height, adjustment capability which enables the distance of the cutting assembly 18 from the table top to be selectively modified. A height adjustment assembly includes a vertical support member 24. The vertical support member 24, or arm, extends longitudinally from the arch slide member 22 toward the center point of the base 12. The cutting assembly 18 is operably secured to a tool mount provided on the end of the support arm 24. The support arm 24 is rigidly supported by the slide member 22 so that it remains angled toward the center point of the base throughout the path of movement of the slide member 22 along the arch 16. As depicted in FIG. 5, the support arm 24 may be rotatably attached to the arch slide member 22, e.g., by a collar, to enable the cutting assembly 18 to be rotated to different angular position with respect to the base 12. The support arm 24 is configured to be unlocked to allow rotation and then locked to prevent further rotation once a desired rotational position is reached.

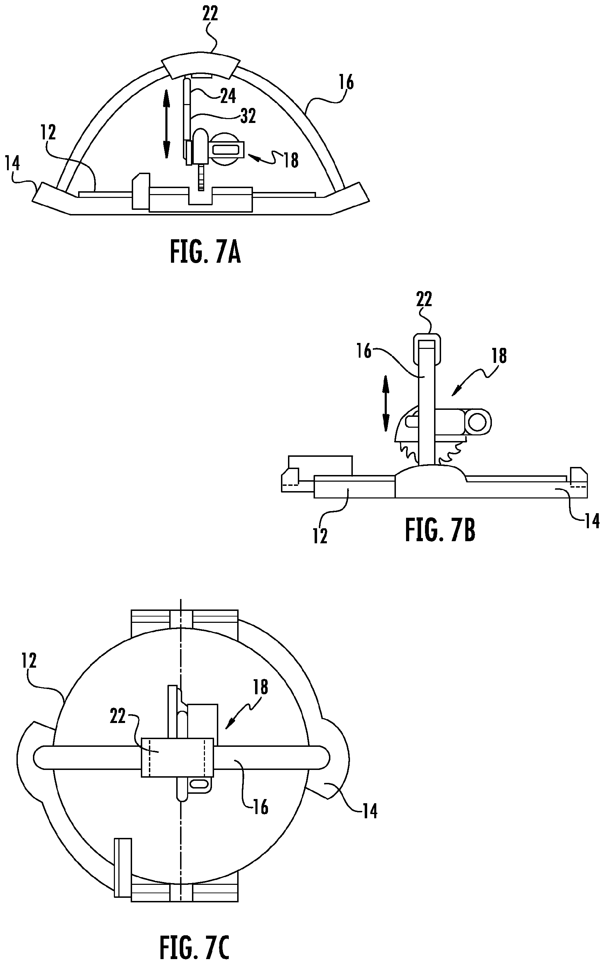

Referring to FIGS. 7A-7C, the height adjustment assembly includes a linear extension rail 32 that is configured to extend axially, e.g., by telescoping, from the support arm 24 toward the base. The cutting assembly 18 is supported at the end of the extension rail 32 so that the height of the cutting assembly 18 can be adjusted relative to the base 12 by extending the extension arm a desired distance. The height adjustment assembly is configured to releasably lock the extension arm 32 in an extended position. The height adjustment assembly may also be configured to allow the cutting assembly to be moved linearly toward and away from the base to perform plunge cuts. In some embodiments, the extension rail 32 includes a sensor (not depicted) configured to adjust the height of the cutting assembly 18 with respect to the workpiece.

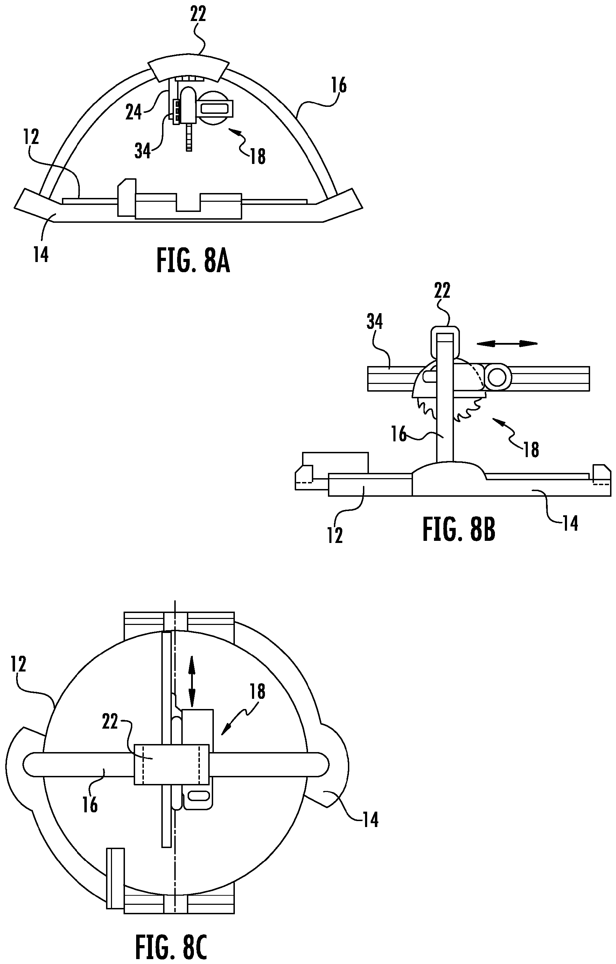

The integral cutting system is also configured to enable a horizontal movement of the cutting assembly 18 with respect to the table top to allow rip cuts and cross cuts to be performed. Referring again to the embodiment of FIGS. 3 and 4, a horizontal guide rail 34 is coupled to the arch slide mount 22 on which the cutting assembly is slidably supported. Referring to FIGS. 8A-8C, the horizontal guide rail 34 defines a horizontal, linear path of movement for the cutting assembly 18 that is substantially parallel to the base 12 and aligned with the center of the base 12. The horizontal guide rail 34 enables the cutting assembly 18 to perform cuts by sliding the blade horizontally (with the motor unit pivotable or fixed in position) against a workpiece that is fixed on position on the base.

A fence system is attached to the turntable 14 that is configured to support a workpiece in ways that facilitate the various types of cuts that can be performed. As depicted in FIG. 3, the fence system includes a pair of fence assemblies 36 that extend from opposite sides of the turntable 14. Each of the fence assemblies 36 includes a fence member 38 extendably supported by rails 40 attached to the turntable 14. Each fence member 38 in turn includes a fence wall 42 that faces toward the turntable 14 and is arranged substantially perpendicular to the saw blade 30. As depicted in FIG. 4, the fence walls enable a workpiece W to be held therebetween so that it is stationary on base 12. The rails 40 are configured to allow the fence members 38 to be moved toward and away from the base to accommodate workpieces of various lengths.

At least one of the fence members 36 also includes a fence wall 44 that is arranged substantially parallel to the blade 30 which can be used as a rip fence or miter fence depending on the orientation of the cutting assembly. As can be seen in FIG. 9C, each fence assembly in the embodiment that utilizes a half arch may be equipped with an additional fence wall 45 arranged parallel to the blade 30 and facing the opposite way from the fence wall 44.

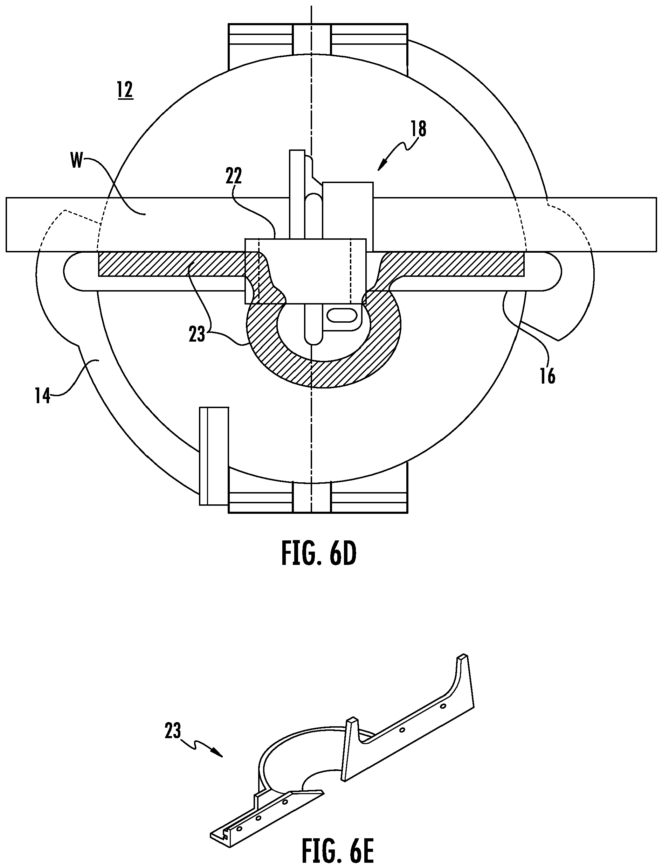

The integral cutting system 10 may also be used with many standard fences that are commonly used with traditional miter saws and table saws. For example, FIG. 6D shows the integral cutting system 10 equipped with a fence 23 (FIG. 6E) for performing chop cuts. The fence 23 is a standard type of fence used with miter saws. The fence 23 is attached to the base 12 and/or the turntable 14 and extends across the base below the arch 16. A workpiece W is held against the fence and the blade is pivoted downwardly (see, e.g., FIGS. 6B and 6C) to perform chop cuts or miter cuts on the workpiece W.

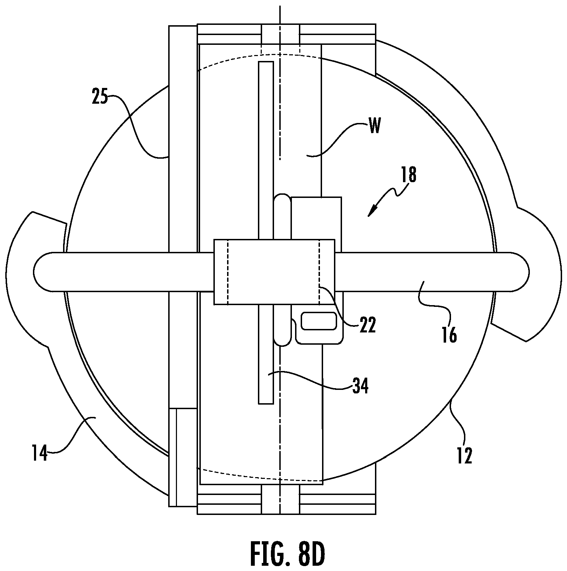

FIG. 8D shows the power tool of FIGS. 8A-8C equipped with a rip fence 25 for performing rip cuts. The rip fence 25 can be a standard rip fence used with table saws. As can be seen in FIG. 8D, the power tool includes a horizontal guide rail 34 that enables the cutting assembly 18 to be moved linearly across the base. The fence 25 is arranged on the base 12 parallel to the horizontal guide rail 34 in order to align the edge of the workpiece W with the cutting path of the cutting assembly.

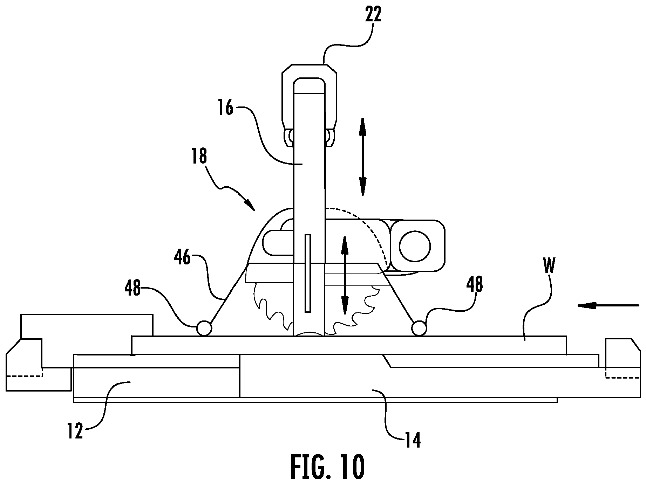

As mentioned above, the height adjustment assembly may be configured to allow the cutting assembly 18 to be moved linearly toward and away from the base 12 so that plunge cuts can be performed. As depicted in FIG. 10, the cutting assembly 18 may be provided with a plunge guard 46 that surrounds the blade 30 and extends downwardly to contact the workpiece W. The plunge guard 46 is configured to guard the blade and prevent saw dust from being dispersed from the cutting area. The plunge guard 46 may be movably mounted to the motor unit 28 to allow the plunge guard to move up/down when contacting the workpiece W. The plunge guard 46 may be spring biased (not shown) so that it applies a downward force onto the workpiece to prevent the workpiece from moving upward.

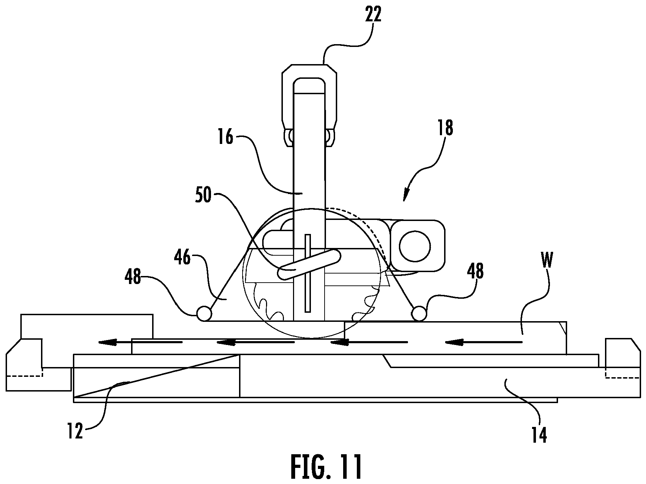

The plunge guard 46 may include rollers 48 that are positioned in contact with the upper surface of the workpiece W to facilitate movement of the workpiece W with respect to the plunge guard 46. This can be beneficial when performing rip cuts. For example, as depicted in FIG. 11, the extension rail 32 may be extended to position the cutting assembly at a particular height in relation to a workpiece. In FIG. 11, a locking lever 50 is used to lock the cutting assembly at the desired height. The workpiece W may then be moved parallel to the saw blade 30 so that the saw blade 30 performs a rip cut on the workpiece. As depicted in FIG. 11, the blade 30 may be locked at a position at which the blade 30 does not extend all the way through the workpiece W. This enables groove cuts to be performed in the upper side of the workpiece.

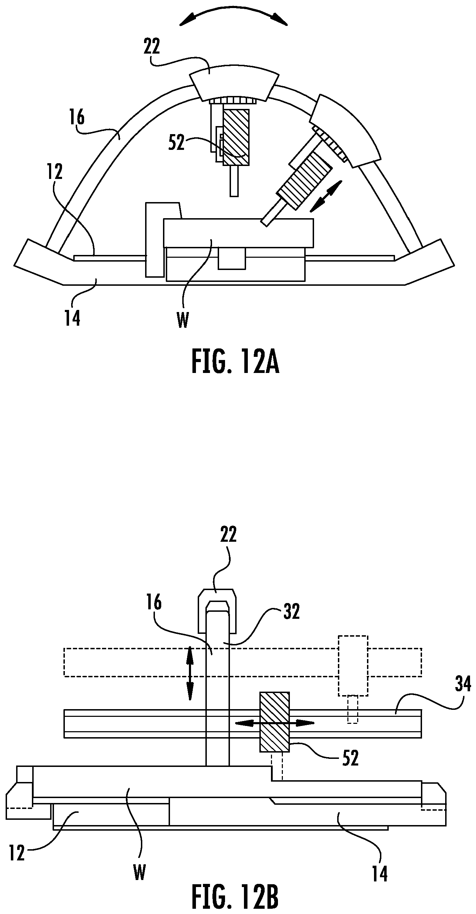

Referring now to FIGS. 12A and 12B, the tool mount may be configured to allow different cutting tools to be removably mounted as fixtures onto the support assembly that can be swapped in and out as needed. The tool mount may be configured to removably support the cutting tools in any suitable manner. In FIGS. 12A and 12B, the cutting assembly 18 is swapped out and replaced by a router fixture 52. As can be seen in FIG. 12A, the arch 16 enables the router 52 to be positioned both vertically and inclined relative to a workpiece W supported on the base 12 and moved toward the base using extension rail 32 to perform drilling operations and form holes in the workpiece. Referring to FIG. 12B, the horizontal guide rail 34 enables the router 18 to be moved horizontally with respect to the workpiece W to perform milling operations. The height of the router can be adjusted and locked at different heights to control the routing depth.

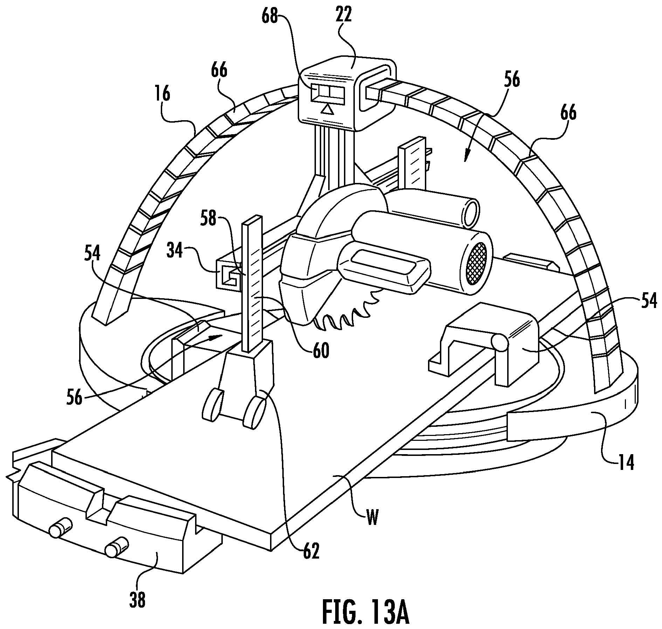

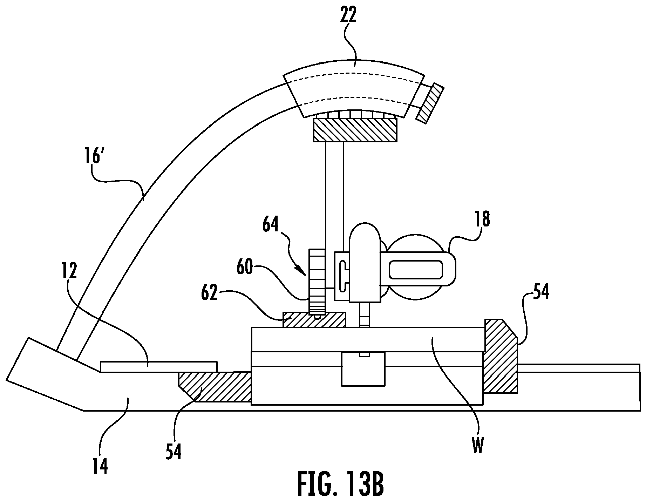

Referring to FIGS. 13A and 13B, the integral cutting system 10 may be provided with various clamping and hold down accessories for aligning and holding a workpiece against the base to prevent kickback when performing various cuts. In one embodiment, the integral cutting system is provided with flip over clamps 54 that are attached to the base 12. The flip over clamps 54 are configured to pivot between a deployed position and a stowed position. In the deployed position, the flip over clamps 54 wrap around the edge of a workpiece W and can be used to align the edge of the workpiece W with respect to the blade 30 in addition to holding the workpiece W against the base 12 during cutting operations. The flip over clamps 54 may have a quick release mechanism (not shown) that enables the clamps to be quickly disengaged from the workpiece. In the stowed position, the flip over clamps are hidden in recesses (not shown) in the base so they do not interfere with the positioning of a workpiece on the base. The integral cutting system 10 may also be provided with hold down clamps 56 that are configured to be removably supported by the horizontal guide rail 34 as depicted in FIG. 13A. The hold down clamps 56 include attachment members 58 that are configured to be removably attached to the horizontal guide rail 34, and clamp rails 60 that extend from the attachment members 58 toward the base 12. A clamping member 62 is supported on the end of each clamp rail 60 that is positioned in contact with the upper surface of a workpiece W.

The attachment member 58 may be configured to adjustably support the clamp rail 60 so that the length of the clamp rail 60 can be adjusted based on the position of the horizontal guide rail 34 and/or the thickness of the workpiece W. As depicted in FIG. 13A, the clamping member 62 may include rollers to facilitate movement of the workpiece W with respect to the hold down clamps 56. The clamp rails 60 may be pivotably attached to the clamping members 62 to allow the hold down clamps 56 to be used when the cutting assembly 18 is supported in a beveled position with respect to the base.

The clamp rails 60 can provide added functionality in the form of a depth or height measurement between the guide rail and the workpiece. For example, the clamp rails 60 may be provided with tic marks 64 as can be seen in FIGS. 13A and 13B. As seen in FIG. 13A, the arch 16 may be provided with markings 66 for indicating the bevel angle. A window 68 may be provided in the arch slide member 22 for reading the bevel angle markings 66 on the arch 16.

While the invention has been illustrated and described in detail in the drawings and foregoing description, the same should be considered as illustrative and not restrictive in character. It is understood that only the preferred embodiments have been presented and that all changes, modifications and further applications that come within the scope of the invention as defined by the claims are desired to be protected.

## Claims

1. A power tool (10) comprising:
a base (12);
a table top (14) supported on the base (12) and having a generally planar support surface;
a saw support assembly (20) including:
an arch-shaped support member (16) attached to a first side portion of the base (12) and which extends arcuately from the first side portion toward a second side portion of the base (12) located on an opposite side of the table top (14) from the first side portion such that the arch-shaped support member (16) extends across at least a portion of the table top (14); and
an arch slide mount (22) slidably supported on the arch-shaped support member (16) and positionable at a plurality of different angular positions along the arch-shaped support member (16); and
a cutting assembly (18) supported above the table top (14) by the arch slide mount (22), the cutting assembly (18) including a saw blade (30) that extends toward the table top (14) and defines a cutting plane;
wherein the cutting assembly (18) is supported by the arch slide mount (22) such that movement of the arch slide mount (22) along the arch-shaped support member (16) alters an orientation of the cutting assembly (18) with respect to the table top (14), **characterized in that** the saw support assembly (20) further comprises a horizontal guide member (34) coupled to the arch slide mount (22) for positioning therewith along the arch-shaped support member (16), the horizontal guide member (34) defining a linear guide path that extends over at least a portion of the table top (14) and is arranged substantially parallel to the support surface,
wherein the cutting assembly (18) is slidably supported by the horizontal guide member (34) for sliding movement along the linear guide path and with the saw blade (30) arranged with the cutting plane parallel to the linear guide path.

2. The power tool of claim 1, wherein the saw support assembly (20) further comprises a height adjustment mechanism that couples the cutting assembly (18) to the arch slide mount (22), the height adjustment mechanism enabling the cutting assembly (18) to be selectively positioned at a plurality of different distances from table top (14).

3. The power tool of claim 1, wherein the saw support assembly (20) further comprises a height adjustment mechanism that couples the cutting assembly (18) to the arch slide mount (22), the height adjustment mechanism enabling the cutting assembly (18) to be selectively positioned at a plurality of different distances from table top (14),
wherein the horizontal guide member (34) is coupled to the height adjustment mechanism arch slide mount (22) for positioning therewith at the different distances from the table top (14).

4. The power tool of claim 3, wherein the height adjustment mechanism is configured to allow the cutting assembly (18) to be moved and guided along an axis toward an away from the table top (14) to perform plunge cuts.

5. The power tool of claim 4, wherein the cutting assembly (18) further comprises:
a housing that covers an upper portion of the saw blade (30); and
a plunge guard (46) removably attached to the housing and extending downwardly from the housing to form a perimeter wall surrounding the saw blade (30).

6. The power tool of claim 5, wherein the plunge guard (46) is configured to be moved into contact with an upper surface of a workpiece (W) positioned on the table top (14) as the cutting assembly (18) is being moved to perform a plunge cut on the workpiece (W), and
wherein the plunge guard (46) is movably attached to the housing such that the cutting assembly (18) is allowed to continue to move toward the workpiece (W) once the plunge guard (46) is positioned in contact with the workpiece (W).

7. The power tool of claim 6, wherein the plunge guard (46) includes rollers (48) which are positioned against the upper surface of the workpiece (W).

8. The power tool of claim 3, further comprising a fence assembly (23).

9. The power tool of claim 1, further comprising at least one hold down member releasably attached to the horizontal guide member (34) in front of or behind the cutting assembly (18), the hold down member extending down horizontal guide member (34) and including a contact portion positioned in contact with an upper surface of a workpiece (W) supported on the table top (14).

10. The power tool of claim 10, wherein the workpiece (W) contact portion includes rollers (48).

## Patentansprüche

1. Elektrowerkzeug (10), umfassend:
eine Basis (12);
eine Tischplatte (14), die auf der Basis (12) gestützt wird und die eine allgemein planare Auflagefläche aufweist;
eine Sägestützbaugruppe (20), die Folgendes umfasst:
ein bogenförmiges Stützelement (16), das an einem ersten Seitenabschnitt der Basis (12) angebracht ist und sich bogenförmig von dem ersten Seitenabschnitt in Richtung eines zweiten Seitenabschnitts der Basis (12), der sich auf einer dem ersten Seitenabschnitt gegenüberliegenden Seite der Tischplatte (14) befindet, dergestalt erstreckt, dass sich das bogenförmige Stützelement (16) über mindestens einen Abschnitt der Tischplatte (14) erstreckt; und
eine Bogen-Gleitmontagehalterung (22), die gleitfähig auf dem bogenförmigen Stützelement (16) gestützt wird und in mehreren verschiedenen Winkelpositionen entlang des bogenförmigen Stützelements (16) positioniert werden kann; und
eine Schneidbaugruppe (18), die über der Tischplatte (14) durch die Bogen-Gleitmontagehalterung (22) gestützt wird, wobei die Schneidbaugruppe (18) ein Sägeblatt (30) umfasst, das sich in Richtung der Tischplatte (14) erstreckt und eine Schneidebene definiert;
wobei die Schneidbaugruppe (18) durch die Bogen-Gleitmontagehalterung (22) dergestalt gestützt wird, dass eine Bewegung der Bogen-Gleitmontagehalterung (22) entlang des bogenförmigen Stützelements (16) eine Ausrichtung der Schneidbaugruppe (18) mit Bezug auf die Tischplatte (14) verändert, **dadurch gekennzeichnet, dass** die Sägestützbaugruppe (20) des Weiteren ein horizontales Führungselement (34) umfasst, das mit der Bogen-Gleitmontagehalterung (22) gekoppelt ist, um damit entlang des bogenförmigen Stützelements (16) positioniert zu werden, wobei das horizontale Führungselement (34) einen linearen Führungspfad definiert, der sich über mindestens einen Abschnitt der Tischplatte (14) erstreckt und im Wesentlichen parallel zu der Auflagefläche angeordnet ist, wobei die Schneidbaugruppe (18) gleitfähig durch das horizontale Führungselement (34) gestützt wird, um eine Gleitbewegung entlang des linearen Führungspfades ausführen zu können, wobei das Sägeblatt (30) so angeordnet ist, dass die Schneidebene parallel zu dem linearen Führungspfad verläuft.

2. Elektrowerkzeug nach Anspruch 1, wobei die Sägestützbaugruppe (20) des Weiteren einen Höhenverstellmechanismus umfasst, der die Schneidbaugruppe (18) mit der Bogen-Gleitmontagehalterung (22) koppelt, wobei der Höhenverstellmechanismus es ermöglicht, dass die Schneidbaugruppe (18) wahlweise in mehreren verschiedenen Distanzen von der Tischplatte (14) positioniert werden kann.

3. Elektrowerkzeug nach Anspruch 1, wobei die Sägestützbaugruppe (20) des Weiteren einen Höhenverstellmechanismus umfasst, der die Schneidbaugruppe (18) mit der Bogen-Gleitmontagehalterung (22) koppelt, wobei der Höhenverstellmechanismus es ermöglicht, dass die Schneidbaugruppe (18) wahlweise in mehreren verschiedenen Distanzen von der Tischplatte (14) positioniert werden kann,
wobei das horizontale Führungselement (34) mit der Höhenverstellmechanismus-Bogen-Gleitmontagehalterung (22) gekoppelt ist, um damit in den verschiedenen Distanzen von der Tischplatte (14) positioniert zu werden.

4. Elektrowerkzeug nach Anspruch 3, wobei der Höhenverstellmechanismus dafür ausgebildet ist, es zu erlauben, dass die Schneidbaugruppe (18) entlang einer Achse zu der Tischplatte (14) hin und von der Tischplatte fort bewegt und geführt werden kann, um Tauchschnitte auszuführen.

5. Elektrowerkzeug nach Anspruch 4, wobei die Schneidbaugruppe (18) des Weiteren Folgendes umfasst:
ein Gehäuse, das einen oberen Abschnitt des Sägeblattes (30) bedeckt; und
eine Tauchschnitt-Schutzvorrichtung (46), die abnehmbar an dem Gehäuse angebracht ist und die sich von dem Gehäuse abwärts erstreckt, um eine Umfangswand zu bilden, die das Sägeblatt (30) umgibt.

6. Elektrowerkzeug nach Anspruch 5, wobei die Tauchschnitt-Schutzvorrichtung (46) dafür ausgebildet ist, in Kontakt mit einer Oberseite eines Werkstücks (W), das auf der Tischplatte (14) positioniert ist, bewegt zu werden, während die Schneidbaugruppe (18) bewegt wird, um einen Tauchschnitt an dem Werkstück (W) auszuführen, und
wobei die Tauchschnitt-Schutzvorrichtung (46) beweglich an dem Gehäuse angebracht ist, dergestalt, dass die Schneidbaugruppe (18) sich weiter in Richtung des Werkstücks (W) bewegen kann, sobald die Tauchschnitt-Schutzvorrichtung (46) in Kontakt mit dem Werkstück (W) positioniert ist.

7. Elektrowerkzeug nach Anspruch 6, wobei die Tauchschnitt-Schutzvorrichtung (46) Rollen (48) umfasst, die gegen die Oberseite des Werkstücks (W) positioniert sind.

8. Elektrowerkzeug nach Anspruch 3, das des Weiteren eine Zaunbaugruppe (23) umfasst.

9. Elektrowerkzeug nach Anspruch 1, das des Weiteren mindestens ein Niederhalteelement umfasst, das abnehmbar an dem horizontalen Führungselement (34) vor oder hinter der Schneidbaugruppe (18) angebracht ist, wobei sich das Niederhalteelement an dem horizontalen Führungselement (34) abwärts erstreckt und einen Kontaktabschnitt enthält, der in Kontakt mit einer Oberseite eines Werkstücks (W) positioniert ist, das auf der Tischplatte (14) gestützt wird.

10. Elektrowerkzeug nach Anspruch 10, wobei der Werkstück (W)-Kontaktabschnitt Rollen (48) umfasst.

## Revendications

1. Outil électrique (10) comprenant :
une base (12) ;
un plateau de table (14) supporté sur la base (12) et présentant une surface de support généralement plane ;
un ensemble support de scie (20) comportant :
un élément de support en forme d'arc (16) fixé à une première partie latérale de la base (12) et qui s'étend en arc de la première partie latérale vers une seconde partie latérale de la base (12) située d'un côté opposé du plateau de table (14) par rapport à la première partie latérale, de manière que l'élément de support en forme d'arc (16) s'étende en travers d'au moins une partie du plateau de table (14) ; et
une monture coulissante d'arc (22) supportée sur l'élément de support en forme d'arc (16) de manière à pouvoir coulisser et pouvant être positionnée à une pluralité de positions angulaires différentes le long de l'élément de support en forme d'arc (16) ; et
un ensemble de coupe (18) supporté au-dessus le plateau de table (14) par la monture coulissante d'arc (22), l'ensemble de coupe (18) comportant une lame de scie (30) qui s'étend vers le plateau de table (14) et définit un plan de coupe ;
dans lequel l'ensemble de coupe (18) est supporté par la monture coulissante d'arc (22) de manière que le déplacement de la monture coulissante d'arc (22) le long de l'élément de support en forme d'arc (16) modifie une orientation de l'ensemble de coupe (18) par rapport au plateau de table (14), **caractérisé en ce que** l'ensemble support de scie (20) comprend en outre un élément de guidage horizontal (34) accouplé à la monture coulissante d'arc (22) pour se positionner avec celle-ci le long de l'élément de support en forme d'arc (16), l'élément de guidage horizontal (34) définissant un trajet de guidage linéaire qui s'étend sur au moins une partie du plateau de table (14) et est disposé sensiblement parallèle à la surface de support,
dans lequel l'ensemble de coupe (18) est supporté par l'élément de guidage horizontal (34) de manière à pouvoir coulisser, aux fins d'un mouvement coulissant le long du trajet de guidage linéaire, la lame de scie (30) étant disposée avec le plan de coupe parallèle au trajet de guidage linéaire.

2. Outil électrique selon la revendication 1, dans lequel l'ensemble support de scie (20) comprend en outre un mécanisme de réglage en hauteur qui accouple l'ensemble de coupe (18) à la monture coulissante d'arc (22), le mécanisme de réglage en hauteur permettant à l'ensemble de coupe (18) d'être positionné de manière sélective à une pluralité de distances différentes par rapport au plateau de table (14).

3. Outil électrique selon la revendication 1, dans lequel l'ensemble support de scie (20) comprend en outre un mécanisme de réglage en hauteur qui accouple l'ensemble de coupe (18) à la monture coulissante d'arc (22), le mécanisme de réglage en hauteur permettant à l'ensemble de coupe (18) d'être positionné de manière sélective à une pluralité de distances différentes par rapport au plateau de table (14),
dans lequel l'élément de guidage horizontal (34) est accouplé à la monture coulissante d'arc de mécanisme de réglage en hauteur (22) pour être positionné avec celle-ci aux différentes distances par rapport au plateau de table (14).

4. Outil électrique selon la revendication 3, dans lequel le mécanisme de réglage en hauteur est conçu pour permettre à l'ensemble de coupe (18) d'être déplacé et guidé le long d'un axe vers et depuis le plateau de table (14) pour effectuer des coupes en plongée.

5. Outil électrique selon la revendication 4, dans lequel l'ensemble de coupe (18) comprend en outre :
un logement qui recouvre une partie supérieure de la lame de scie (30) ; et
un protecteur plongeant (46) fixé au logement de manière amovible et s'étendant vers le bas par rapport au logement pour former une paroi périphérique entourant la lame de scie (30).

6. Outil électrique selon la revendication 5, dans lequel le protecteur plongeant (46) est conçu pour venir au contact d'une surface supérieure de pièce à travailler (W) positionnée sur le plateau de table (14), à mesure que l'ensemble de coupe (18) se déplace pour effectuer une coupe en plongée sur la pièce à travailler (W), et
dans lequel le protecteur plongeant (46) est fixé au logement de façon amovible, de manière à permettre à l'ensemble de coupe (18) de continuer à se déplacer vers la pièce à travailler (W), une fois que le protecteur plongeant (46) est positionné au contact de la pièce à travailler (W).

7. Outil électrique selon la revendication 6, dans lequel le protecteur plongeant (46) comporte des rouleaux (48) qui sont positionnés contre la surface supérieure de la pièce à travailler (W).

8. Outil électrique selon la revendication 3, comprenant en outre un ensemble formant guide (23).

9. Outil électrique selon la revendication 1, comprenant en outre au moins un élément formant valet d'établi fixé de manière détachable à l'élément de guidage horizontal (34), devant ou derrière l'ensemble de coupe (18), l'élément formant valet d'établi s'étendant vers le bas de l'élément de guidage horizontal (34) et comportant une partie de contact positionnée au contact d'une surface supérieure de pièce à travailler (W) supportée sur le plateau de table (14).

10. Outil électrique selon la revendication 10, dans lequel la partie au contact de la pièce à travailler (W) comporte des rouleaux (48).
